(19) Europäisches Patentamt
European Patent Office
Office européen des brevets

(11) Publication number: **0 140 915**
**B1**

(12) # EUROPEAN PATENT SPECIFICATION

(45) Date of publication of patent specification: **08.07.87**

(51) Int. Cl.⁴: **C 01 F 11/06**

(21) Application number: **84901290.1**

(22) Date of filing: **05.03.84**

(86) International application number: **PCT/US 84/00325**

(87) International publication number: **WO/8403691 (27.09.84 Gazette 84/23)**

(54) **CATALYTIC PROCESS FOR ACCELERATED DECARBOXYLATION OF CALCIUM CARBONATE AND BLEND THEREFOR.**

(30) Priority: **18.03.83 US 476609**

(43) Date of publication of application: **15.05.85 Bulletin 85/20**

(45) Publication of the grant of the patent: **08.07.87 Bulletin 87/28**

(84) Designated contracting states: **DE FR GB NL SE**

(56) References cited:
**US-A- 1 249 028**
**US-A- 1 588 253**
**US-A- 2 282 584**
**Chemistry and Technology of Lime and Limestone, issued 1966, R.S. Boynton, Interscience Publishers, pages 153, 154**

(73) Proprietor: **SOUTHWEST RESEARCH INSTITUTE**
**Post Office Drawer 28510 6220 Culebra Road**
**San Antonio, TX 78284 (US)**

(72) Inventor: **MALLOW, William, A.**
**6220 Culebra Road**
**San Antonio, TX 78284 (US)**
Inventor: **DZUIK, Jerome, J., Jr.**
**Route 3 Box 512AH**
**San Antonio, TX 78218 (US)**
Inventor: **FUNNELL, John E.**

**deceased (US)**

(74) Representative: **Perry, Robert Edward et al**
**GILL JENNINGS & EVERY 53-64 Chancery Lane**
**London WC2A 1HN (GB)**

**EP 0 140 915 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

**Description**

There are a number of procedures where it is desired to decarboxylate a calcium carbonate-containing material to calcium oxide. The most notable are in the production of lime and hydraulic cements. The American lime industry alone sells more than $19 \times 10^9$ kg (21 million tons) of lime a year with most of it being produced in energy-intensive rotary or shaft kilns. The lime manufacturing process is relatively simple in that particulate materials are fed into refractory lined furnaces, mixed with suitable fuels, and subjected to intense heat caused by the combustion of the fuel. Provisions are made to optimize exposure of the feeds to the thermal environment and the system is an open one to permit escape of the products of calcination ; lime and carbon dioxide and traces of moisture. The heating or calcination of limestone into lime requires breaking an oxygen-to-carbon bond and liberating carbon dioxide. The calcination reaction is represented by the equilibrium equation :

$$CaCO_3 \rightleftharpoons CaO + CO_2$$

In commercial practice the actual energy employed is many times greater than the theoretical bond strength due to heat losses, heat transfer properties, and the impetus required to remove the liberated carbon dioxide.

Large amounts of energy were used in such decarboxylation, when energy was inexpensive and abundant, to hasten calcination and promote the removal of $CO_2$ from the reaction bed. Such usage, while not expensive, was wasteful, and, in some cases, when excessive temperatures were used, often resulted in overburning or hard burning and caused the reaction of lime with impurities producing hard grains in the lime.

With escalation of energy costs due to the vast increases in the price of fossil fuels such as oil and coal, many efforts have been undertaken to conserve energy and reduce costs in this energy intensive process. These have included changes in apparatus, the use of air purges, evacuation, or collection of the carbon dioxide, and the use of « dry feed » practices to eliminate the need for large amounts of energy to remove water from the calcined product. While effecting some reduction in fuel usage, they have not been entirely successful in cutting costs.

It is to be understood, of course, that the energy consumption in the production of lime by calcination of limestone is also applicable to the cement industry where the calcination of limestone represents a major portion of the energy-consuming process.

The present invention overcomes the problems of the prior art and permits the rapid decarboxylation of calcium carbonate at faster rates and at lower kiln temperature, giving a reduction in present fuel energy requirements of up to about 50 %.

According to one aspect of the present invention, a method for the accelerated decarboxylation of a calcium carbonate material of the type suitable for use in the production of lime or cement, comprises heating the calcium carbonate material in the presence of a fused salt of the formula $MX \cdot CaO$, $M_2CO_3 \cdot CaO$ or $M_2O \cdot CaO$ wherein M is an alkali metal and X is a halogen atom.

According to another aspect of the present invention, a blend adapted to be heated to form CaO, comprises a calcium carbonate material and a fused salt as defined above.

While the invention relates broadly to any process or blend where a suitable calcium carbonate material is to be decarboxylated by heat, it will be described in detail with respect to one of the most important industries where this occurs ; namely, the manufacture of hydraulic cements. A major step in that process is calcination of a calcium carbonate material. When referring herein to a « calcium carbonate material », it is intended to mean limestone, dolomite, or any other source of calcium carbonate conventionally used to make lime, cements, and the like. Limestone is, of course, the most commonly used source of calcium carbonate for these purposes.

The instant process requires the use of certain catalysts which are, in broadest outline, thermal reaction products of calcium carbonate and an alkali metal halide or carbonate. These catalysts can be described as fused salts and have a vitreous nature. The calcium carbonate used to make the catalyst can be any calcium carbonate-containing material such as the limestone, dolomite or calcium carbonate per se. With respect to the alkali metal halide, it can be sodium chloride, potassium chloride, lithium chloride, lithium iodide, lithium fluoride, sodium iodide, potassium iodide, cesium iodide, rubidium chloride, and the like. As to the carbonates, illustrative examples are sodium carbonate, potassium carbonate, lithium carbonate, cesium carbonate, and the like. Of the alkali materials used, it is preferred to use sodium or potassium carbonate. The fused salts have the formula $(MX) \cdot (CaO)$ in which M is the alkali metal and X is the halide, carbonate, or oxide.

The catalysts are formed by admixing ; preferably in equal molar ratios, a calcium carbonate material with any one or a mixture of the alkali metal compounds. Molar ratios of carbonate material to alkali metal compound ranging from 50 to 1 to 1 to 50 can be used. The mixture is preferably ground to a homogenous blend and heated to a temperature sufficient and for a time sufficient to assure fusion to a vitreous-like mass ; usually a temperature of about 900° to 1 000 °C. (± 100 °C.). The fused salt is then cooled and ground to a particle size which is preferably either above or below that of the calcium carbonate material

to be decarboxylated or calcined for the reason set forth below. Grinding to a mesh size of about — 100 to + 200 is preferred.

As to the process of decarboxylation or calcination, from about 0.1 to about 20 parts by weight of the granular catalyst ; preferably about 1 to 10 parts by weight, are the added for each 100 parts by weight of the calcium carbonate material, the mixture then fed into a furnace, and then heated to a temperature and for a time sufficient to get the desired degree of decarboxylation or calcination. While the precise calcining temperature and treatment time will vary depending upon the efficiency of the furnace, the particular catalyst, and the uniformity of the heating, it has been found that temperatures as low as 450 °C., but preferably 800° to 900 °C., for about thirty to forty-five minutes is sufficient for proper calcination. This is to be contrasted with calcination temperatures of about 1 200° to 1 350 °C required for longer periods of time in the absence of the fused salt.

When the heat treatment is finished, the treated mixture will comprise free lime and magnesia (from dolomitic limestone) with the unaltered fused salt catalyst. By providing for a difference in the particle size between the catalyst and the untreated limestone, it is possible to easily separate the catalyst for reuse by using any conventional separation procedure, such as screening or air classification.

In instances where the fused salt is one formed by reacting a sodium or potassium carbonate with calcium carbonate, such catalyst may be allowed to remain as part of the final product since it will have a very low sodium or potassium content and will not be deleterious for many of the uses for which the cement is required.

For most effective results the catalyst and calcium carbonate material should be finely ground to about — 100 to — 200 mesh powder. This optimizes the activity of the catalyst and assures a more complete burn and economy of fuel. Thus, for present cement operations using coarse feeds, a pre-grinding of the feed to the noted mesh is suggested.

The invention will be further described in connection with the following examples which are set forth for purposes of illustration only.

## Example 1

Equal molar ratios of limestone and sodium carbonate are blended and ground to an homogenous blend. The mixture is then heated to about 1 000 °C. for 60 minutes to assure fusion to a vitreous mass, cooled and ground to about — 100 + 200 mesh.

Ten parts by weight of the granular catalyst is then added to 100 parts by weight of ground limestone (— 200 mesh), fed into a furnace, and heated at 800°-850 °C. for sufficient time to assure a uniform degree of heating ; at least 30 minutes but not necessarily greater than 45 minutes. The emerging mixture will comprise free lime (and magnesia) with the unaltered fused salt catalyst. The catalyst may be lightly coated with calcination product but gentle abrasion will restore ist original surface and allow its reuse.

In 15 minutes the catalyzed mixture will achieve over 60 % conversion compared to 20-30 % when uncatalyzed. In 30 minutes at 850 °C. the catalyzed mixture will be approximately 99 % calcined compared to less than 50 % when uncatalyzed.

## Example 2

The same procedure as Example 1 is followed except that cesium chloride is substituted in like amount for the sodium carbonate. The rate and degree of calcination at 15 minutes is reduced from that obtained in Example 1 from 60 % to 45-50 % with the halide.

## Example 3

The procedure of Example 2 is followed, except that separately, and in turn, the same amounts of LiI, NaCl, KCl, LiF, NaI, and CeI are substituted for the CeCl. Equivalent results are obtained.

## Example 4

To determine the potential contribution of the fused salt catalysts of the present invention in a typical Portland cement kiln-feed system, 12 samples were fired at 850 °C., 950 °C., and 1 232 °C. for 30 minutes and 60 minutes, weighing before and after the firing to monitor rate and degree of decarboxylation. Samples (6) containing a fused salt of potassium carbonate and calcium carbonate prepared as set forth

in Example 1 were found to lose weight much faster than the untreated controls (6) at all temperatures with the catalyzed samples going to completion in 30 minutes at 1 232 °C. whereas the control was no further calcined at 60 minutes/1 232 °C. than in 60 minutes at 950 °C. and only slightly better than at 30 minutes/950 °C. The specimens were then analyzed for free lime by titration with ammonium acetate. The catalyzed samples were found to contain significantly less free lime than the controls and when compared to the titration of conventionally produced, fresh Portland cement, the low free lime content of the catalyzed feed was even more impressive.

Free Lime Concentration

| Specimen Calcination Time and Temperature | Uncatalyzed Specimens % Free Lime | Catalyzed Specimens % Free Lime |
|---|---|---|
| 30 minutes at 850°C. | 14.85 | 13.60 |
| 60 minutes at 850°C. | 13.55 | 12.15 |
| 30 minutes at 950°C. | 13.05 | 11.05 |
| 60 minutes at 950°C. | 12.95 | 10.90 |
| 30 minutes at 1232°C. | 2.85 | .75 |
| 60 minutes at 1232°C. | 2.75 | .60 |

From the above it can be seen that it is possible to reduce the kiln temperatures required to economically produce the quantities of calcium oxide or cement currently generated without reducing production rates. The reduced operating temperatures permit a longer service life and reduced maintenance and repair of calcining equipment, extended service life of refractories, reduced heat losses through the insulators, and delivery of a product from the calcining zone at lower temperatures thereby reducing the amount of energy input and subsequent energy loss during cooling and packaging.

Also, the calcium oxide (lime) which emerges from the catalyzed lower temperature system is of improved quality. A soft-burned-more porous lime results which is very chemically active and readily useful in the production of countless calcium salts including the perchlorates essential to manufacture of bleach and chlorinating agents.

While the halides are operative, they are not as suitable as the carbonate catalysts by virtue of the fact that the halides present can have a corrosive effect on the equipment used to heat the mixture of calcium carbonate material and catalyst.

Further, to make the catalytic action even more effective, the surface of the refractory lining of the kilns can be coated with the fused salt.

In addition to the fused salt catalysts described in detail above, it has also been found that certain alkali metal molybdates also function to catalyze the carboxylation of calcium carbonates. However, these materials ; such as sodium silicomolybdate, sodium phosphomolybdate, and the equivalent potassium salts are not commercially acceptable since they are expensive and not readily available materials.

**Claims**

1. A method for the accelerated decarboxylation of a calcium carbonate material of the type suitable for use in the production of lime or cement, which comprises heating the calcium carbonate material in the presence of a fused salt of the formula $MX \cdot CaO$, $M_2CO_3 \cdot CaO$ or $M_2O \cdot CaO$ wherein M is an alkali metal and X is a halogen atom.

2. A method according to claim 1, wherein the material is limestone or dolomite.

3. A method according to claim 1 or claim 2, wherein from 0.1 to 10 parts by weight of the fused salt are used per 100 parts by weight of the material.

4. A method according to any preceding claim, wherein the fused salt is $Na_2O \cdot CaO$ or $K_2O \cdot CaO$.

5. A method according to any preceding claim, which is conducted at 560 to 900 °C.

6. A method according to any preceding claim, which additionally comprises separating the fused salt from the decarboxylated material, for reuse.

7. A method for making a cement, which comprises calcining a calcium carbonate material,

characterised in that the calcination comprises a method according to any preceding claim.

8. A method according to claim 7, wherein the cement is a hydraulic cement.

9. A blend adapted to be heated to form CaO, which comprises a calcium carbonate material and a fused salt as defined in any of claims 1 to 4.

## Patentansprüche

1. Verfahren zur beschleunigten Decarboxylierung eines Calciumcarbonatmaterials, der zur Verwendung bei der Herstellung von Kalk oder Zement geeigneten Art, wobei das Verfahren das Erhitzen des Calciumcarbonatmaterials in Anwesenheit eines verschmolzenen Salzes der Formel $MX \cdot CaO$, $M_2CO_3 \cdot CaO$ oder $M_2O \cdot CaO$ umfaßt, worin M ein Alkalimetall und X ein Halogenatom ist.

2. Verfahren nach Anspruch 1, worin das Material Kalkstein oder Dolomit ist.

3. Verfahren nach Anspruch 1 oder 2, worin von 0,1 bis 10 Gew.-Teile des verschmolzenen Salzes pro 100 Gew.-Teile des Materials verwendet werden.

4. Verfahren nach irgendeinem vorhergehenden Anspruch, worin das verschmolzene Salz $Na_2O \cdot CaO$ oder $K_2O \cdot CaO$ ist.

5. Verfahren nach irgendeinem vorhergehenden Anspruch, das bei 560 bis 900 °C durchgeführt wird.

6. Verfahren nach irgendeinem vorhergehenden Anspruch, das zusätzlich die Abtrennung des verschmolzenen Salzes vom decarboxylierten Material, zur Wiederverwendung, umfaßt.

7. Verfahren zur Herstellung eines Zements, das das Calcinieren eines Calciumcarbonatmaterials umfaßt, dadurch gekennzeichnet, daß die Calcinierung ein Verfahren nach irgendeinem vorhergehenden Anspruch umfaßt.

8. Verfahren nach Anspruch 7, worin der Zement ein hydraulischer Zement ist.

9. Mischung, die beim Erhitzen zur Bildung von CaO gut geeignet ist, wobei die Mischung ein Calciumcarbonatmaterial und ein verschmolzenes Salz, wie es in irgendeinem der Ansprüche 1 bis 4 definiert wurde, umfaßt.

## Revendications

1. Un procédé pour la décarboxylation accélérée d'un matériau de carbonate de calcium du type approprié pour l'utilisation dans la production de chaux ou de ciment, qui comporte le chauffage du matériau de carbonate de calcium en présence d'un sel fondu de formule $MX \cdot CaO$ ou $M_2CO_3 \cdot CaO$ ou $M_2O \cdot CaO$ dans laquelle M est un métal alcalin et X est un atome d'halogène.

2. Un procédé selon la revendication 1, dans lequel le matériau est le calcaire ou la dolomite.

3. Un procédé selon la revendication 1 ou 2, dans lequel on utilise 0,1 à 10 parties en poids du sel fondu pour 100 parties en poids du matériau.

4. Un procédé selon l'une quelconque des revendications précédentes, dans lequel le sel fondu est $Na_2O \cdot CaO$ ou $K_2O \cdot CaO$.

5. Un procédé selon l'une quelconque des revendications précédentes, qui est mis en œuvre à 560-900 °C.

6. Un procédé selon l'une quelconque des revendications précédentes, qui comporte en outre la séparation du sel fondu du matériau décarboxylé, pour sa réutilisation.

7. Un procédé pour fabriquer un ciment, qui comporte la calcination d'un matériau de carbonate de calcium, caractérisé en ce que la calcination comprend un procédé selon l'une quelconque des revendications précédentes.

8. Un procédé selon la revendication 7, dans lequel le ciment est un ciment hydraulique.

9. Un mélange adapté pour être chauffé pour former CaO, qui comprend un matériau de carbonate de calcium et un sel fondu tel que défini dans l'une quelconque des revendications 1 à 4.